# EUROPÄISCHE PATENTSCHRIFT

(11) **EP 1 812 710 B1**
(45) Veröffentlichungstag und Bekanntmachung des Hinweises auf die Patenterteilung: **16.12.2009**
(21) Anmeldenummer: 05797714.2
(22) Anmeldetag: 13.10.2005
(51) Int. Cl.: F04B 1/14, F04B 27/10, F04B 49/00

(54) **TAUMELANTRIEB**
SWASH DRIVE
ENTRAINEMENT OSCILLANT

(30) Priorität: 16.11.2004 DE 102004056019
(43) Veröffentlichungstag der Anmeldung: 01.08.2007
(73) Patentinhaber: Alfred Kärcher GmbH & Co. KG, 71364 Winnenden (DE)
(72) Erfinder: NATHAN, Robert, 71522 Backnang (DE)
(74) Vertreter: Karrais, Martin
(86) Internationale Anmeldenummer: PCT/EP2005/010998
(87) Internationale Veröffentlichungsnummer: WO 2006/053611

(56) Entgegenhaltungen:
- WO-A-00/08335
- GB-A- 528 038
- GB-A- 585 181
- GB-A- 976 608
- PATENT ABSTRACTS OF JAPAN Bd. 2002, Nr. 09, 4. September 2002 (2002-09-04) & JP 2002 147343 A (KANZAKI KOKYUKOKI MFG CO LTD), 22. Mai 2002 (2002-05-22)
- PATENT ABSTRACTS OF JAPAN Bd. 2003, Nr. 12, 5. Dezember 2003 (2003-12-05) & JP 2004 316902 A (NTN CORP), 11. November 2004 (2004-11-11)

## Beschreibung

Die Erfindung betrifft einen Taumelantrieb für ein Hochdruckreinigungsgerät mit einem um eine Drehachse drehend antreibbaren Taumelkörper und einer zur Drehachse geneigten Taumelscheibe, an deren Stirnseite parallel zur Drehachse hin- und her bewegbare Kolben einer Kolbenpumpe anlegbar sind, wobei der Taumelkörper über ein Stützlager an einer Stützplatte anliegt und zwischen dem Taumelkörper und der Taumelscheibe ein Taumelscheibenlager angeordnet ist.

Derartige Taumelantriebe sind aus der WO 00/08335 bekannt, die den nächstkommenden Stand der Technik darstellt. Sie kommen bei Hochdruckreinigungsgeräten zum Einsatz, um die Drehbewegung einer Motorwelle in eine hin- und her gehende Bewegung der Kolben umzuwandeln. Mittels der Kolben kann dann periodisch Reinigungsflüssigkeit, vorzugsweise Wasser, angesaugt, unter Druck gesetzt und über eine Druckleitung abgegeben werden. Soll die Förderleistung des Hochdruckreinigungsgerätes geändert werden, so kann hierzu der Hub der Kolben verändert werden. Eine Hubänderung kann dadurch erzielt werden, dass die Kolben in einem veränderten radialen Abstand zur Drehachse an der Stirnseite der Taumelscheibe anliegen. Je größer der radiale Abstand der Kolben von der Drehachse des Taumelkörpers ist, desto größer ist bei gleichbleibender Neigung der Taumelscheibe der erzielbare Hub der Kolben. Eine Vergrößerung des radialen Abstandes der Kolben von der Drehachse erfordert allerdings eine erhebliche konstruktive Umgestaltung der Kolbenpumpe.

Alternativ kann man zur Änderung der Förderleistung des Hochdruckreinigungsgerätes den Hub der Kolben bei gleichbleibender radialer Anordnung bezogen auf die Drehachse durch eine Änderung der Neigung der Taumelscheibe verändern. Je größer die Neigung der Taumelscheibe zur Drehachse des Taumelkörpers, desto größer ist der Kolbenhub, der bei gleichbleibender radialer Anordnung der Kolben erzielt werden kann. Bei einer Änderung der Neigung der Taumelscheibe ist der konstruktive Aufbau der Kolbenpumpe lediglich an die veränderten Axialbewegungen der Kolben anzupassen. Eine derartige Anpassung kann auf konstruktiv einfache Weise erfolgen. Eine vergrößerte Neigung der Taumelscheibe bedingt allerdings erheblich größere Kippmomente, die von der Taumelscheibe über das Taumellager auf den Taumelkörper und von diesem über das Stützlager auf die Stützplatte übertragen werden. Die hierbei auftretenden Radialkräfte können von den üblichen Stützlagern nur sehr beschränkt aufgenommen werden, da die Gefahr besteht, dass die Wälzkörper des Stützlagers in radialer Richtung ausweichen.

Zur Lagerung einer Taumelscheibe an einem drehfest auf einer Antriebswelle gehaltenen Taumelkörper wird in der GB 976,608 A ein Kugellager mit einem inneren und einem äußeren Lagerring vorgeschlagen. Der innere Lagerring ist drehfest mit der Taumelscheibe und der äußere Lagerring ist drehfest mit dem Taumelkörper verbunden. Der innere Lagerring ist einteilig ausgestaltet und weist zwei Lagerlaufflächen auf, wohingegen der äußere Lagerring zweiteilig ausgestaltet ist und eine vordere und eine hintere Lagerringhälfte umfasst, die jeweils eine Lagerlauffläche für die Lagerkugeln des Kugellagers aufweisen. Die beiden Lagerringhälften werden von einem Lagertragring umschlossen und stützen mit ihren Lagerlaufflächen die Lagerkugeln außenseitig ab.

Aus der japanischen Druckschrift JP 2002 147343 A ist eine Taumelscheibe bekannt, die über ein Wälzkörperlager an einer Gehäusewand abgestützt ist. Das Wälzkörperlager weist bezogen auf die Axialrichtung einen vorderen und einen hinteren Lagerring auf mit jeweils einer konischen Lagerlauffläche für dazwischen angeordnete Wälzkörper.

Aufgabe der vorliegenden Erfindung ist es, einen Taumelantrieb der eingangs genannten Art derart weiterzubilden, dass ohne Gefahr einer Beschädigung des Stützlagers die Neigung der Taumelscheibe vergrößert werden kann.

Diese Aufgabe wird bei einem Taumelantrieb der gattungsgemäßen Art erfindungsgemäß dadurch gelöst, dass das Stützlager als Schrägkugellager ausgestaltet ist, wobei der Taumelkörper die Lagerkugeln des Stützlagers außenseitig abstützt.

Erfindungsgemäß ist das Stützlager als Schrägkugellager ausgestaltet, und die Lagerkugeln des Stützlagers werden bezogen auf die Radialrichtung außenseitig vom Taumelkörper abgestützt. Es hat sich gezeigt, dass durch einen derartigen Aufbau des Taumelantriebes auch größere Radialkräfte ohne Beschädigung des Stützlagers oder sonstiger Bauteile des Taumelantriebes zuverlässig aufgefangen werden können, so dass die Neigung der Taumelscheibe erhöht werden kann. Beispielsweise kann der Neigungswinkel der Taumelscheibe bezogen auf die Dreh-achse des Taumelkörpers mehr als 14° betragen.

Vorzugsweise weist die Stützplatte eine zentrale Öffnung auf, die von einem radial ausgerichteten Innenflansch umgeben ist, der über ein Umlenkabschnitt in einen radial ausgerichteten Außenflansch übergeht, wobei der Umlenkabschnitt taumelkörperseitig eine Lagerrille für das Stützlager ausbildet. Dies ermöglicht eine besonders kostengünstige Herstellung des Taumelantriebes, da die Stützplatte selbst eine Lagerrille für das Stützlager ausbildet, so dass ein separater Fertigungsschritt für die Herstellung der Lagerrille entfallen kann.

Von Vorteil ist es, wenn der Innenflansch bezogen auf die Drehachse des Taumelkörpers in Richtung des Taumelkörpers versetzt zum Außenflansch angeordnet ist. Dies ermöglicht eine besonders einfache Montage des Stützlagers, da der Umlenkabschnitt zwischen dem vorstehenden Innenflansch und dem zurückgesetzten Außenflansch eine Zentrierhilfe ausbildet für das Stützlager, so dass der Kugellagerring des Stützlagers ohne Montagehilfe auf die Stützplatte aufgesetzt werden kann.

Die Stützplatte kann beispielsweise als Blechteil ausgestaltet sein, das im Tiefziehverfahren geformt ist.

Bei einer vorteilhaften Ausführungsform bildet der Taumelkörper stützplattenseitig eine Lagerrille für das Stützlager aus, an die sich ein in Richtung der Stützplatte ausgerichteter Kragen anschließt, der die Lagerkugeln des Stützlagers überlappt. Mit seinem Kragen übergreift der Taumelkörper die Lagerkugeln des Stützlagers, so dass diese nicht in radialer Richtung ausweichen können. Somit werden auch hohe Radialkräfte vom Stützlager und dem Taumelkörper zuverlässig aufgefangen.

Von besonderem Vorteil ist es, wenn der Taumelkörper taumelscheibenseitig und stützplattenseitig jeweils eine Lagerrille ausbildet, wobei der radiale Abstand des Rillengrundes der taumelscheibenseitigen Lagerrille vom Rillengrund der stützplattenseitigen Lagerrille kleiner ist als der Durchmesser der Lagerkugeln des Stützlagers. Die Stützflächen, die der Taumelkörper für die Lagerkugeln des Taumelscheibenlagers und des Stützlagers ausbildet, können dieselben Teilkreisdurchmesser aufweisen. Es kann aber auch vorgesehen sein, dass der Teilkreisdurchmesser der Stützfläche für das Taumelscheibenlager kleiner ist als der Teilkreisdurchmesser der Stützfläche, die der Taumelkörper für das Stützlager ausbildet. Der Unterschied in den Teilkreisdurchmessern ist vorzugsweise so gewählt, dass der radiale Abstand der Rillengründe der Lagerrillen kleiner ist als der Durchmesser der Lagerkugeln des Stützlagers. Dadurch kann eine hohe mechanische Belastbarkeit des Taumelantriebes auch im Hinblick auf radial ausgerichtete Kräfte erzielt werden. Außerdem ermöglicht eine derartige Ausgestaltung eine kostengünstige Herstellung des Taumelkörpers, da dieser vorzugsweise als im Tiefziehverfahren hergestelltes Blechteil ausgestaltet sein kann, wobei durch die erläuterte Anordnung der Rillengründe der Lagerrillen ein gutes Fließverhalten des Materials des Taumelkörpers ermöglicht wird.

Günstig ist es, wenn die Lagerkugeln des Taumelscheibenlagers einen anderen Durchmesser aufweisen als die Lagerkugeln des Stützlagers. Insbesondere kann vorgesehen sein, dass der Durchmesser der Lagerkugeln des Taumelscheibenlagers kleiner ist als der Durchmesser der Lagerkugeln des Stützlagers.

Während das Stützlager als Schrägkugellager ausgestaltet ist, kann das Taumelscheibenlager in Form eines Axialkugellagers ausgebildet sein.

Bei einer besonders bevorzugten Ausführungsform ist allerdings vorgesehen, dass sowohl das Stützlager als auch das Taumelscheibenlager als Schrägkugellager ausgebildet sind. Dadurch kann die Montage des Taumelantriebes zusätzlich vereinfacht werden, indem der Taumelkörper eine Zentrierhilfe ausbildet, auf die der Kugellagerring des Taumelscheibenlagers ohne Montagehilfe aufgesetzt werden kann. Der Einsatz zweier Schrägkugellager für den Taumelantrieb ermöglicht es in Kombination mit der außenseitigen Abstützung der Lagerkugeln des Stützlagers durch den Taumelkörper, besonders große Radialkräfte zuverlässig aufnehmen zu können, so dass auch größere Neigungswinkel für die Taumelscheibe vorgesehen sein können ohne die Lebensdauer des Taumelantriebes zu beeinträchtigen.

Vorzugsweise ist der Taumelkörper bezogen auf seine radiale Ausdehnung in einem äußeren Bereich als der Stützplatte zugewandter Kragen und einem mittleren Bereich als der Taumelscheibe zugewandter Vorsprung ausgestaltet, wobei er im Übergangsbereich zwischen dem Kragen und dem Vorsprung stützplattenseitig eine Lagerrille des Stützlagers und taumelscheibenseitig eine Lagerrille des Taumelscheibenlagers ausbildet. Es hat sich gezeigt, dass dies eine besonders kostengünstige Formgebung des Taumelkörpers mittels eines Tiefziehverfahrens ermöglicht, wobei der Taumelkörper eine hohe mechanische Belastbarkeit aufweist und ein sehr gutes Fließverhalten des Materials des Taumelkörpers während des Tiefziehens sichergestellt ist.

Eine mechanische Verstärkung kann der Taumelkörper dadurch erhalten, dass er in seinem zentralen Innenbereich als wannenartige Vertiefung ausgestaltet ist mit einer parallel zur Stützplatte ausgerichteten Bodenwand, die eine zentrale Öffnung aufweist. Die Bodenwand ist bei einer derartigen Ausgestaltung des Taumelkörpers taumelscheibenseitig von einem ringförmigen Vorsprung umgeben, der an seinem Außenrand eine Lagerrille des Taumelscheibenlagers ausbildet und über einen Umlenkabschnitt in den Kragen des Taumelkörpers übergeht, wobei der Umlenkabschnitt stützplattenseitig eine Lagerrrille des Stützlagers ausbildet.

Die Taumelscheibe ist vorzugsweise als ebene Ringscheibe ausgebildet, die über einen Umlenkabschnitt in einen dem Taumelkörper zugewandten Kragen übergeht, wobei der Umlenkabschnitt taumelkörperseitig eine Lagerrille des Taumelscheibenlagers ausbildet.

Die Taumelscheibe kann ebenfalls als im Tiefziehverfahren geformtes Blechteil ausgestaltet sein.

Bei einer besonders bevorzugten Ausführungsform des erfindungsgemäßen Taumelantriebes ist an der Stützplatte ein Elektromotor gehalten, dessen Motorwelle am Taumelkörper drehfest gehalten und über das Stützlager drehbar gelagert ist. Das als Schrägkugellager ausgebildete Stützlager übernimmt bei einer derartigen Ausführungsform nicht nur die Funktion der Lagerung des Taumelkörpers an der Stützplatte, sondern zusätzlich wird über das Stützlager die Motorwelle des Elektromotors drehbar gelagert. Dies ermöglicht einen besonders einfachen konstruktiven Aufbau des Taumelantriebes, der kostengünstieg herstellbar und innerhalb kurzer Zeit montierbar ist, denn im Bereich der Stützplatte kann ein separates Lager für die Motorwelle entfallen.

Von besonderem Vorteil ist es, wenn der Elektromotor als Außenläufermotor ausgestaltet ist mit einem Stator, der an der Stützplatte gehalten ist, und einem den Stator umgreifenden Rotor, der drehfest mit der Motorwelle verbunden ist. Der Einsatz eines Außenläufermotors ermöglicht eine weitere Vereinfachung des konstruktiven Aufbaus des Taumelantriebes, wobei der Stator an der Stützplatte - beispielsweise mittels Verbindungsschrauben - gehalten ist. Die Stützplatte bildet somit einen Stirnflansch des Elektromotors, und die Lagerung der Motorwelle erfolgt über den Taumelkörper und das Stützlager.

Es kann vorgesehen sein, dass die Motorwelle zweifach drehbar gelagert ist, nämlich über ein Motorlager am Stator und über das Stützlager an der Stützplatte. Die Lagerung am Stator kann mittels eines Gleitlagers oder eines Wälzlagers, insbesondere eines Kugellagers, erfolgen.

Von besonderem Vorteil ist es, wenn die Motorwelle nur einseitig drehbar gelagert ist, nämlich über das Stützlager an der Stützplatte. Bei einer derartigen Ausgestaltung entfällt ein zweites Lager für die Motorwelle, vielmehr ist diese nur einseitig gelagert und trägt den Rotor des Elektromotors.

Die Halterung des Elektromotors an der Stützplatte erfolgt bei einer bevorzugten Ausführungsform dadurch, dass der Taumelantrieb ein topfartiges Gehäuse aufweist mit einer Bodenwand und einer von dieser abstehenden Umfangswand, wobei die Bodenwand eine Öffnung aufweist und zwischen der Stützplatte und dem Stator des Elektromotors eingespannt ist. Bei einem derartigen Aufbau liegt die Stützplatte an der Innenseite der Bodenwand und der Stator des Elektromotors an der Außenseite der Bodenwand des Gehäuses an, und durch Verschrauben der Stützplatte mit dem Stator wird die Bodenwand zwischen diesen beiden Bauteilen eingespannt, so dass diese lösbar verbindbar am Gehäuse des Taumelantriebes gehalten sind. Günstig ist es hierbei, wenn die Stützplatte mit ihrem Außenrand einen Formschluss mit dem Gehäuse ausbildet, denn dadurch kann die mechanische Belastbarkeit des Taumelantriebes erhöht und die Montage vereinfacht werden.

Die nachfolgende Beschreibung zweier bevorzugter Ausführungsformen der Erfindung dient im Zusammenhang mit der Zeichnung der näheren Erläuterung. Es zeigen:
- Figur 1:: eine schematische Schnittansicht einer ersten Ausführungsform ei- nes Taumelantriebes;
- Figur 2:: eine schematische Schnittansicht einer Taumeleinheit des Taumel- antriebes aus Figur 1;
- Figur 3:: eine schematische Schnittansicht einer zweiten Ausführungsform eines Taumelantriebes und
- Figur 4:: eine schematische Schnittansicht einer alternativen Taumeleinheit für die Taumelantriebe aus Figur 1 und 3.

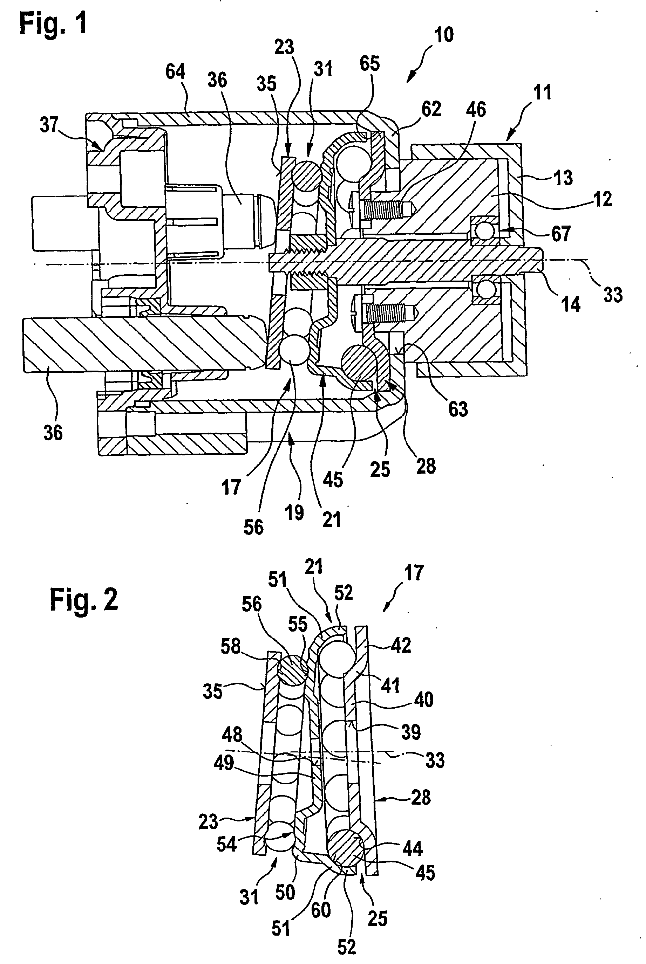

In Figur 1 ist schematisch ein Taumelantrieb 10 für ein Hochdruckreinigungsgerät dargestellt. Es umfasst einen als Außenläufermotor ausgestalteten Elektromotor 11 mit einem Stator 12 und einem diesen umgreifenden Rotor 13, der drehfest an einer den Stator 12 durchgreifenden Motorwelle 14 gehalten ist. Der Taumelantrieb 10 umfasst außerdem eine Taumeleinheit 17, die von einem topfförmigen Gehäuse 19 umgeben ist und einen drehfest mit der Motorwelle 14 verbundenen Taumelkörper 21 sowie eine Taumelscheibe 23 aufweist. Der Taumelkörper 21 liegt über ein als Schrägkugellager ausgestaltetes Stützlager 25 an einer Stützplatte 28 an, die mit dem Stator 12 verschraubt ist. Die Taumelscheibe 23 stützt sich über ein als Axialkugellager ausgestaltetes Taumelscheibenlager 31 am Taumelkörper 21 ab. Sie ist bei den in den Figuren 1 bis 3 dargestellten Ausfühungsformen als ebene, ringförmige Scheibe ausgebildet und zur Drehachse 33 der Motorwelle 14 geneigt. An einer Stirnseite 35 der Taumelscheibe 23 liegen Kolben 36 einer an sich bekannten und deshalb in der Zeichnung nicht dargestellten Axialkolbenpumpe an. Die Kolben 23 sind in axialer Richtung, das heißt parallel zur Drehachse 33, in einem Zylinderkopf 37 verschiebbar gehalten und mittels an sich bekannter und deshalb in der Zeichnung zur Erzielung einer besseren Übersicht ebenfalls nicht dargestellter, die Kolben 36 umgebender Federn in Richtung auf die Taumelscheibe 23 vorgespannt.

Wie insbesondere aus Figur 2 deutlich wird, weist die Stützplatte 28 eine zentrale Öffnung 39 auf, die von der Motorwelle 14 durchgriffen wird und von einem radial ausgerichteten Innenflansch 40 umgeben ist, der über einen Umlenkabschnitt 41 in einen radial ausgerichteten Außenflansch 42 übergeht. Der Innenflansch 40 ist bezüglich der Drehachse 33 in Richtung des Taumelkörpers 21 versetzt zum Außenflansch 42 angeordnet, und der Umlenkabschnitt 41 bildet taumelkörperseitig, das heißt dem Taumelkörper 21 zugewandt, eine erste Lagerrille 44 für das Stützlager 25 aus, so dass sich Lagerkugeln 45 des Stützlagers 25 an den Lagerrillen 44 abwälzen können.

Auf der der ersten Lagerrille 24 abgewandten Rückseite der Stützplatte 28 liegt im Bereich des Innenflansches 40 der Stator 12 flächig an der Stützplatte 28 an und ist mittels Verbindungsschrauben 46 mit der Stützplatte 28 verschraubt.

Der Taumelkörper 21 weist eine zentrale Öffnung 48 auf, die von der Motorwelle 14 durchgriffen und von einem radial ausgerichteten Innenflansch 49 umgeben ist, an den sich eine ringförmige Erhebung 50 anschließt, die über einen Umlenkabschnitt 51 in einen der Stützplatte 28 zugewandten Kragen 52 übergeht. Die Erhebung 50 erstreckt sich in Umfangsrichtung nur über einen Teilbereich des Taumelkörpers 21, wobei ihre Höhe in axialer Richtung von einem Wert 0 über einen Winkelbereich von 180° kontinuierlich auf einen maximalen Wert ansteigt, um anschließend über einen weiteren Winkelbereich von 180° wieder auf den Wert 0 abzufallen. Die Erhebung 50 bildet taumelscheibenseitig eine schräg zur Drehachse 33 geneigte und parallel zur Taumelscheibe 23 ausgerichtete kreisscheibenförmige Lagerfläche 54 aus, in die eine erste Lagerrille 55 des Taumelscheibenlagers 31 eingeformt ist, so dass sich Lagerkugeln 56 des Taumelscheibenlagers 31 an den Lagerrillen 55 abwälzen können. Eine korrespondierende zweite Lagerrille 58 ist taumelkörperseitig in die Taumelscheibe 23 eingeformt.

Der Umlenkabschnitt 51 des Taumelkörpers 21 bildet stützplattenseitig eine zweite Lagerrille 60 für das Stützlager 25 aus. Die Lagerkugeln 45 werden auf ihre der Drehachse 33 abgewandten Außenseite vom Kragen 52 des Taumelkörpers 21 abgestützt. Innenseitig stützen sie sich am Umlenkabschnitt 41 ab.

Das Gehäuse 19 des Taumelantriebes 10 weist eine Bodenwand 62 auf mit einer zentralen Öffnung 63, und von der Bodenwand 62 steht eine mantelförmige Umfangswand 64 ab. Die Bodenwand 62 ist zwischen den Außenflansch 42 der Stützplatte 28 und den Stator 12 des Elektromotors 11 eingespannt. Im Übergangsbereich zwischen der Bodenwand 62 und der Umfangswand 64 bildet das Gehäuse 19 eine Aufnahme 65 aus, die die Stützplatte 28 formschlüssig aufnimmt.

Wie bereits erläutert, ist der Elektromotor 11 als Außenläufermotor ausgestaltet, wobei der Rotor 13 den Stator 12 umgreift und drehfest mit der Motorwelle 14 verbunden ist. Letztere ist bei dem in Figur 1 dargestellten Ausführungsbeispiel einerseits über den Taumelkörper 21 und das als Schrägkugellager ausgebildete Stützlager 25 an der Stützplatte 28 und andererseits über ein Kugellager 67 am Stator 12 drehgar gelagert. Das Stützlager 25 übernimmt somit zusätzlich zu seiner Funktion der drehbaren Lagerung des Taumelkörpers 21 auch die Funktion der drehbaren Lagerung der Motorwelle 14.

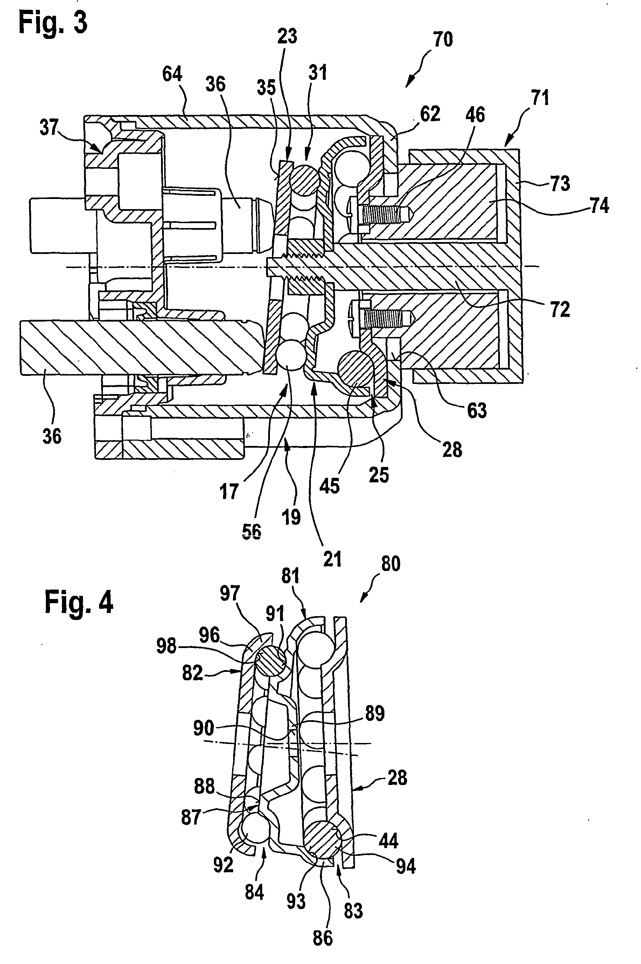

In Figur 3 ist eine zweite Ausführungsform eines erfindungsgemäßen Taumelantriebes dargestellt und insgesamt mit dem Bezugszeichen 70 belegt. Diese ist weitgehend identisch ausgebildet wie der voranstehend beschriebene Taumelantrieb 10. Identische Bauteile sind daher in Figur 3 mit denselben Bezugszeichen bezeichnet wie in den Figuren 1 und 2. Bezüglich dieser Bauteile wird zur Vermeidung von Wiederholungen auf die voranstehenden Erläuterungen Bezug genommen.

Der Taumelantrieb 70 unterscheidet sich vom Taumelantrieb 10 dadurch, dass ein Elektromotor 71 mit nur einseitig gelagerter Motorwelle 72 zum Einsatz kommt. Die einseitige Lagerung der Motorwelle 72 erfolgt mittels des Stützlagers 25, wie dies voranstehend bereits beschrieben wurde. An der Motorwelle 72 ist drehfest der Rotor 73 des Elektromotors 71 festgelegt, der den Stator 74 des Elektromotors 71 umgreift. Der Taumelantrieb 70 zeichnet sich somit durch einen besonders einfachen konstruktiven Aufbau aus.

In Figur 4 ist eine alternative Ausführungsform einer insgesamt mit dem Bezugszeichen 80 belegten Taumeleinheit dargestellt, die sowohl bei dem in Figur 1 darstellten Taumelantrieb 10 als auch bei dem in Figur 3 dargestellten Taumelantrieb 70 zum Einsatz kommen kann. Die Taumeleinheit 80 ist ähnlich ausgebildet wie die in den Figuren 1, 2 und 3 dargestellte Taumeleinheit 17, für identische Bauteile werden daher dieselben Bezugszeichen verwendet wie in den Figuren 1, 2 und 3 und bezüglich dieser Bauteile wird zur Vermeidung von Wiederholungen auf die voranstehenden Erläuterungen Bezug genommen.

Von der Taumeleinheit 17 unterscheidet sich die Taumeleinheit 80 dadurch, dass sowohl das Stützlager als auch das Taumelscheibenlager als Schrägkugellager ausgestaltet sind. Die Taumeleinheit 80 umfasst eine Stützplatte 28, wie sie voranstehend bereits erläutert wurde. Zusätzlich weist sie einen Taumelkörper 81 sowie eine Taumelscheibe 82 auf. Der Taumelkörper 81 stützt sich über ein als Schrägkugellager ausgestaltetes Stützlager 83 an der Stützplatte 28 ab, und zwischen der Taumelscheibe 82 und dem Taumelkörper 81 ist ein ebenfalls als Schrägkugellager ausgestaltetes Taumelscheibenlager 84 angeordnet.

Der Taumelkörper 81 bildet an seinem Außenumfang einen der Stützplatte 28 zugewandten Kragen 86 aus, und einem in radialer Richtung mittleren Bereich ist der Taumelkörper 81 als der Taumelscheibe 82 zugewandter, ringförmiger Vorsprung 87 ausgebildet. Letzter weist in Umfangsrichtung keine einheitliche Höhe in axialer Richtung auf, sondern ausgehend von einer Mindesthöhe steigt die Höhe des Vorsprunges 87 über einen Winkelbereich von 180° kontinuierlich auf eine Maximalhöhe an, um über einen weiteren Winkelbereich von 180° wieder auf die Mindesthöhe abzufallen. Der Vorsprung 87 weist eine ebene, zur Drehachse 33 entsprechend der Taumelscheibe 82 geneigte Stirnfläche 88 auf. Der Vorsprung 87 umgibt eine zentrale wannenartige Vertiefung mit einer Bodenwand 89, die eine zentrale Öffnung 90 aufweist und parallel zur Stützplatte 28 ausgerichtet ist.

Außenseitig schließt sich an die Stirnfläche 88 in einem Übergangsbereich zwischen dem Vorsprung 87 und dem Kragen 86 eine Lagerrille 91 für Lagerkugeln 92 des Taumelscheibenlagers 84 an. Die Lagerkugeln 92 werden somit innenseitig vom Vorsprung 87 abgestützt.

In radialer Richtung nach außen versetzt zur Lagerrille 91 bildet der Lagerkörper 81 stützplattenseitig eine Lagerrille 93 für Lagerkugeln 94 des Stützlagers 83 aus. Mit der Lagerrille 93 des Taumelkörpers 81 korrespondiert die Lagerrille 44 der Stützplatte 28. Die Lagerkugeln 94 werden außenseitig vom Kragen 86 abgestützt.

Die Taumelscheibe 82 ist als ebene, schräg zur Drehachse 33 ausgerichtete Ringscheibe ausgestaltet, die über einen Umlenkabschnitt 96 in einen dem Taumelkörper 81 zugewandten Kragen 97 übergeht, und der Umlenkabschnitt 96 bildet taumelkörperseitig eine Lagerrille 98 aus, die mit der Lagerrille 91 des Taumelkörpers 81 korrespondiert.

Sowohl bei der Taumeleinheit 17 als auch bei der Taumeleinheit 80 bildet die Stützplatte 28 eine Justierhilfe aus zur Montage des Taumelantriebes, da die Stützlager 25 bzw. 83 ohne weitere Montagehilfe auf dem Umlenkabschnitt 41 der Stützplatte 28 positioniert werden können.

Bei der Taumeleinheit 80 bildet der Taumelkörper 81 eine weitere Justierhilfe zur Montage aus, da das Taumelscheibenlager 84 ohne weitere Montagehilfe auf dem Vorsprung 87 positioniert werden kann.

Der Rillengrund der Lagerrillen 55 und 91 der Taumelscheibenlager 31 bzw. 84 ist in einem Abstand zum Rillengrund der Lagerrille 60 bzw. 93 des Stützlagers 25 bzw. 83 angeordnet, der geringer ist als der Durchmesser der Lagerkugeln 45 bzw. 94 der Stützlager 25 bzw. 83. Dadurch kann eine besonders hohe Belastbarkeit der Taumeleinheiten 17 und 80 erzielt werden. Dies ermöglicht es insbesondere, die Taumelscheiben 23 und 82 in einem Neigungswinkel bezogen auf die Drehachse 33 auszurichten, der größer als 14° ist.

## Patentansprüche

1. Taumelantrieb für ein Hochdruckreinigungsgerät mit einem um eine Drehachse drehend antreibbaren Taumelkörper und einer zur Drehachse geneigten Taumelscheibe, an deren Stirnseite parallel zur Drehachse hin- und her bewegbare Kolben einer Kolbenpumpe anlegbar sind, wobei der Taumelkörper über ein Stützlager an einer Stützplatte anliegt und zwischen dem Taumelkörper und der Taumelscheibe ein Taumelscheibenlager angeordnet ist, **dadurch gekennzeichnet, dass** das Stützlager (25; 83) als Schrägkugellager ausgestaltet ist, wobei der Taumelkörper (21; 81) die Lagerkugeln (45; 94) des Stützlagers (25; 83) außenseitig abstützt.

2. Taumelantrieb nach Anspruch 1, **dadurch gekennzeichnet, dass** die Stützplatte (28) eine zentrale Öffnung (39) aufweist, die von einem radial ausgerichteten Innenflansch (40) umgeben ist, der über einen Umlenkabschnitt (41) in einen radial ausgerichteten Außenflansch (42) übergeht, wobei der Umlenkabschnitt (41) taumelkörperseitig eine Lagerrille (44) für das Stützlager (25; 83) ausbildet.

3. Taumelantrieb nach Anspruch 2, **dadurch gekennzeichnet, dass** der Innenflansch (40) bezogen auf die Drehachse (33) des Taumelkörpers (21; 81) in Richtung des Taumelkörpers (21; 81) versetzt zum Außenflansch (42) angeordnet ist.

4. Taumelantrieb nach Anspruch 1, 2 oder 3, **dadurch gekennzeichnet, dass** der Taumelkörper (21; 81) stützplattenseitig eine Lagerrille (60; 93) für das Stützlager (25; 83) ausbildet, an die sich ein in Richtung der Stützplatte (28) ausgerichteter Kragen (52; 86) anschließt, der die Lagerkugeln (45; 94) des Stützlagers (25; 83) überlappt.

5. Taumelantrieb nach einem der voranstehenden Ansprüche, **dadurch gekennzeichnet, dass** der Taumelkörper (21; 81) taumelscheibenseitig und stützplattenseitig jeweils eine Lagerrille (55, 60; 91, 93) ausbildet, wobei der radiale Abstand des Rillengrundes der taumelscheibenseitigen Lagerrille (55; 91) vom Rillengrund der stützplattenseitigen Lagerrille (60; 93) kleiner ist als der Durchmesser der Lagerkugeln (45; 94) des Stützlagers (25; 83).

6. Taumelantrieb nach einem der voranstehenden Ansprüche, **dadurch gekennzeichnet, dass** die Lagerkugeln (55; 92) des Taumelscheibenlagers (31; 84) einen anderen Durchmesser aufweisen als die Lagerkugeln (45; 94) des Stützlagers (25; 83).

7. Taumelantrieb nach einem der voranstehenden Ansprüche, **dadurch gekennzeichnet, dass** das Taumelscheibenlager (84) als Schrägkugellager ausgestaltet ist.

8. Taumelantrieb nach Anspruch 7, **dadurch gekennzeichnet, dass** der Taumelkörper (81) in einem äußeren Bereich als der Stützplatte (28) zugewandter Kragen (86) und in einem mittleren Bereich als der Taumelscheibe (82) zugewandter Vorsprung (87) ausgestaltet ist, wobei er im Übergangsbereich zwischen dem Kragen (86) und dem Vorsprung (87) stützplattenseitig eine Lagerrille (93) des Stützlagers (83) und taumelscheibenseitig eine Lagerrille (91) des Taumelscheibenlagers (84) ausbildet.

9. Taumelantrieb nach Anspruch 8, **dadurch gekennzeichnet, dass** der Taumelkörper (81) in seinem zentralen Innenbereich als wannenartige Vertiefung ausgestaltet ist mit einer parallel zur Stützplatte (28) ausgerichteten Bodenwand (89), die eine zentrale Öffnung (90) aufweist.

10. Taumelantrieb nach Anspruch 7, 8 oder 9, **dadurch gekennzeichnet, dass** die Taumelscheibe (82) eine ebene Ringscheibe ausbildet, die über einen Umlenkabschnitt (96) in einen dem Taumelkörper (81) zugewandten Kragen (97) übergeht, wobei der Umlenkabschnitt (96) taumelkörperseitig eine Lagerrille (98) des Taumelscheibenlagers (84) ausbildet.

11. Taumelantrieb nach einem der voranstehenden Ansprüche, **dadurch gekennzeichnet, dass** an der Stützplatte (28) ein Elektromotor (11; 71) gehalten ist, dessen Motorwelle (14; 72) am Taumelkörper (21; 81) drehfest gehalten und über das Stützlager (25; 83) drehbar gelagert ist.

12. Taumelantrieb nach Anspruch 11, **dadurch gekennzeichnet, dass** der Elektromotor (11; 71) als Außenläufermotor ausgestaltet ist mit einem Stator (12; 74), der an der Stützplatte (28) gehalten ist, und einem den Stator (12; 74) umgreifenden Rotor (13; 73), der drehfest mit der Motorwelle (14; 72) verbunden ist.

13. Taumelantrieb nach Anspruch 12, **dadurch gekennzeichnet, dass** die Motorwelle (14) zweifach drehbar gelagert ist, nämlich über ein Motorlager (67) am Stator (12) und über das Stützlager (25) an der Stützplatte (28).

14. Taumelantrieb nach Anspruch 12, **dadurch gekennzeichnet, dass** die Motorwelle (72) nur einseitig drehbar gelagert ist, nämlich über das Stützlager (83) an der Stützplatte (28).

15. Taumelantrieb nach einem der Ansprüche 11 bis 14, **dadurch gekennzeichnet, dass** der Taumelantrieb (10) ein topfartiges Gehäuse (19) aufweist mit einer Bodenwand (62) und einer von dieser abstehenden Umfangswand (64), wobei die Bodenwand (62) eine Öffnung (63) aufweist und zwischen der Stützplatte (28) und dem Stator (12; 74) eingespannt ist.

## Claims

1. Swash drive for a high-pressure cleaning appliance with a swash body which can be driven in rotation about an axis of rotation, and a swash plate which is inclined in relation to the axis of rotation and on the face of which there can engage pistons of a piston pump which are movable back and forth parallel to the axis of rotation, the swash body butting against a supporting plate via a supporting bearing, and a swash-plate bearing being disposed between the swash body and the swash plate, **characterized in that** the supporting bearing (25; 83) is configured as an angular-contact ball bearing, with the swash body (21; 81) supporting the bearing balls (45; 94) of the supporting bearing (25; 83) on the outside.

2. Swash drive according to Claim 1, **characterized in that** the supporting plate (28) has a central opening (39) which is bounded by a radially oriented inner flange (40) which merges, via a cranked portion (41), into a radially oriented outer flange (42), the cranked portion (41) forming, on the swash-body side, a bearing channel (44) for the supporting bearing (25; 83).

3. Swash drive according to Claim 2, **characterized in that**, in relation to the axis of rotation (33) of the swash body (21; 81), the inner flange (40) is offset with respect to the outer flange (42) in the direction of the swash body (21; 81).

4. Swash drive according to Claim 1, 2 or 3, **characterized in that** the swash body (21; 81) forms, on the supporting-plate side, a bearing channel (60; 93) for the supporting bearing (25; 83), and the bearing channel is followed by a collar (52; 86) which is oriented in the direction of the supporting plate (28) and overlaps the bearing balls (45; 94) of the supporting bearing (25; 83).

5. Swash drive according to one of the preceding claims, **characterized in that** the swash body (21; 81) forms a bearing channel (55, 60; 91, 93) on the swash-plate side and supporting-plate side in each case, the radial spacing between the base of the swash-plate-side bearing channel (55; 91) and the base of the supporting-plate-side bearing channel (60; 93) being smaller than the diameter of the bearing balls (45; 94) of the supporting bearing (25; 83).

6. Swash drive according to one of the preceding claims, **characterized in that** the bearing balls (55; 92) of the swash-plate bearing (31; 84) differ in diameter from the bearing balls (45; 94) of the supporting bearing (25; 83).

7. Swash drive according to one of the preceding claims, **characterized in that** the swash-plate bearing (84) is configured as an angular-contact ball bearing.

8. Swash drive according to Claim 7, **characterized in that** the swash body (81) is configured, in an outer region, as a collar (86) which is directed toward the supporting plate (28) and, in a central region, as a protrusion (87) which is directed toward the swash plate (82), the swash body forming in the transition region between the collar (86) and the protrusion (87), on the supporting-plate side, a bearing channel (93) of the supporting bearing (83) and, on the swash-plate side, a bearing channel (91) of the swash-plate bearing (84).

9. Swash drive according to Claim 8, **characterized in that** the swash body (81) is configured, in its central inner region, as a well-like depression with a base wall (89) which is oriented parallel to the supporting plate (28) and has a central opening (90).

10. Swash drive according to Claim 7, 8 or 9, **characterized in that** the swash plate (82) forms a planar annular plate which merges, via a bent-around portion (96), into a collar (97) which is directed toward the swash body (81), the bent-around portion (96) forming, on the swash-body side, a bearing channel (98) of the swash-plate bearing (84).

11. Swash drive according to one of the preceding claims, **characterized in that** there is mounted on the supporting plate (28) an electric motor (11; 71), the motor shaft (14; 72) of which is mounted in a rotationally fixed manner on the swash body (21; 81) and is supported in a rotatable manner via the supporting bearing (25; 83).

12. Swash drive according to Claim 11, **characterized in that** the electric motor (11; 71) is configured as an external rotor motor with a stator (12; 74), which is mounted on the supporting plate (28), and a rotor (13; 73), which is fitted around the stator (12; 74) and is connected in a rotationally fixed manner to the motor shaft (14; 72).

13. Swash drive according to Claim 12, **characterized in that** the motor shaft (14) is supported in a rotatable manner at two locations, namely on the stator (12), via a motor bearing (67), and on the supporting plate (28), via the supporting bearing (25).

14. Swash drive according to Claim 12, **characterized in that** the motor shaft (72) is supported in a rotatable manner only at one end, namely on the supporting plate (28), via the supporting bearing (83).

15. Swash drive according to one of Claims 11 to 14, **characterized in that** the swash drive (10) has a cup-like housing (19) with a base wall (62) and a circumferential wall (64) projecting therefrom, the base wall (62) having an opening (63) and being clamped in between the supporting plate (28) and the stator (12; 74).

## Revendications

1. Entraînement oscillant pour un appareil de nettoyage à haute pression avec un corps oscillant pouvant être entraîné de manière rotative autour d'un axe de rotation et avec un plateau oscillant incliné par rapport à l'axe de rotation, au niveau duquel côté avant peuvent être appliqués des pistons d'une pompe à piston déplaçables dans un sens et dans l'autre parallèlement à l'axe de rotation, dans lequel le corps oscillant s'appuie contre une plaque d'appui par le biais d'un palier d'appui et un palier de plateau oscillant est agencé entre le corps oscillant et le plateau oscillant, **caractérisé en ce que** le palier d'appui (25 ; 83) est réalisé sous forme de roulement à billes à contact oblique, le corps oscillant (21 ; 81) soutenant à l'extérieur les billes de roulement (45 ; 94) du palier d'appui (25 ; 83).

2. Entraînement oscillant selon la revendication 1, **caractérisé en ce que** la plaque d'appui (28) présente une ouverture centrale (39), qui est entourée d'une bride intérieure (40) à orientation radiale, qui se transforme par le biais d'une section de déviation (41) en une bride extérieure à orientation radiale (42), la section de déviation (41) formant côté corps oscillant, une gorge de roulement (44) pour le palier d'appui (25 ; 83).

3. Entraînement oscillant selon la revendication 2, **caractérisé en ce que** par rapport à l'axe de rotation (33) du corps oscillant (21 ; 81), la bride intérieure (40) est agencée en direction du corps oscillant (21 ; 81) de manière décalée par rapport à la bride extérieure (42).

4. Entraînement oscillant selon la revendication 1, 2 ou 3, **caractérisé en ce que** le corps oscillant (21 ; 81) forme côté plaque d'appui une gorge de roulement (60 ; 93) pour le palier d'appui (25 ; 83), à laquelle se raccorde une collerette (52 ; 86) orientée en direction de la plaque d'appui (28) et recouvrant les billes de roulement (45 ; 94) du palier d'appui (25 ; 83).

5. Entraînement oscillant selon l'une quelconque des revendications précédentes, **caractérisé en ce que** le corps oscillant (21 ; 81) forme côté plateau oscillant et côté plaque d'appui respectivement une gorge de roulement (55, 60 ; 91, 93), la distance radiale entre le fond de la gorge de roulement (55 ; 91) côté plateau oscillant et le fond de la gorge de roulement (60 ; 93) côté plaque d'appui étant inférieure au diamètre des billes de roulement (45 ; 94) du palier d'appui (25 ; 83).

6. Entraînement oscillant selon l'une quelconque des revendications précédentes, **caractérisé en ce que** les billes de roulement (55 ; 92) du palier de plateau oscillant (31 ; 84) présentent un autre diamètre que les billes de roulement (45 ; 94) du palier d'appui (25 ; 83).

7. Entraînement oscillant selon l'une quelconque des revendications précédentes, **caractérisé en ce que** le palier de plateau oscillant (84) est réalisé sous forme de roulement à billes à contact oblique.

8. Entraînement oscillant selon la revendication 7, **caractérisé en ce que** le corps oscillant (81) est réalisé dans une zone extérieure sous forme de collerette (86) tournée vers la plaque d'appui (28) et dans une zone médiane sous forme de saillie (87) tournée vers le plateau oscillant (82), sachant qu'il forme dans une zone de transition entre la collerette (86) et la saillie (87) côté palier d'appui une gorge de roulement (93) du palier d'appui (83) et côté plateau oscillant une gorge de roulement (91) du palier de plateau oscillant (84).

9. Entraînement oscillant selon la revendication 8, **caractérisé en ce que** le corps oscillant (81) est conçu dans sa zone intérieure centrale sous forme d'évidement de type cuvette avec une paroi de fond (89) orientée parallèlement à la plaque d'appui (28) et présentant une ouverture centrale (90).

10. Entraînement oscillant selon la revendication 7, 8 ou 9, **caractérisé en ce que** le plateau oscillant (82) forme un disque annulaire plat, qui se transforme par le biais d'une section de déviation (96) en une collerette (97) tournée vers le corps oscillant (81), la section de déviation (96) formant côté corps oscillant une gorge de roulement (98) du palier de plateau oscillant (84).

11. Entraînement oscillant selon l'une quelconque des revendications précédentes, **caractérisé en ce qu'**un moteur électrique (11 ; 71), dont l'arbre (14 ; 72) est maintenu de manière solidaire en rotation au niveau du corps oscillant (21 ; 81) et logé de manière rotative par le biais du palier d'appui (25 ; 83), est maintenu au niveau de la plaque d'appui (28).

12. Entraînement oscillant selon la revendication 11, **caractérisé en ce que** le moteur électrique (11 ; 71) est réalisé sous forme de moteur à induit extérieur avec un stator (12 ; 74) qui est maintenu au niveau de la plaque d'appui (28) et un rotor (13 ; 73) entourant le stator (12 ; 74) et relié de manière solidaire en rotation à l'arbre moteur (14 ; 72).

13. Entraînement oscillant selon la revendication 12, **caractérisé en ce que** l'arbre moteur (14) est logé deux fois de manière rotative, à savoir sur le stator (12) par le biais d'un palier de moteur (67) et sur la plaque d'appui (28) par le biais du palier d'appui (25).

14. Entraînement oscillant selon la revendication 12, **caractérisé en ce que** l'arbre moteur (72) n'est logé de manière rotative que d'un côté à savoir sur la plaque d'appui (28) par le biais du palier d'appui (83).

15. Entraînement oscillant selon l'une quelconque des revendications 11 à 14, **caractérisé en ce que** l'entraînement oscillant (10) présente un carter en forme de pot (19) avec une paroi de fond (62) et une paroi périphérique (64) éloignée de celle-ci, la paroi de fond (62) présentant une ouverture (63) et est serrée entre la plaque d'appui (28) et le stator (12 ; 74).
